(19) Europäisches Patentamt
European Patent Office
Office européen des brevets

(11) Veröffentlichungsnummer : **0 108 339**
**B1**

(12) **EUROPÄISCHE PATENTSCHRIFT**

(45) Veröffentlichungstag der Patentschrift : **17.08.88**

(51) Int. Cl.⁴ : **C 07 F 5/06**, C 08 G 79/10

(21) Anmeldenummer : **83110692.7**

(22) Anmeldetag : **26.10.83**

(54) **Verfahren zur Herstellung von oligomeren Aluminoxanen.**

(30) Priorität : **02.11.82 DE 3240383**

(43) Veröffentlichungstag der Anmeldung : **16.05.84 Patentblatt 84/20**

(45) Bekanntmachung des Hinweises auf die Patenterteilung : **17.08.88 Patentblatt 88/33**

(84) Benannte Vertragsstaaten : **BE DE FR GB IT NL**

(56) Entgegenhaltungen :
**DE-A- 2 102 810**
**SU-A- 566 844**

(73) Patentinhaber : **HOECHST AKTIENGESELLSCHAFT**
**Postfach 80 03 20**
**D-6230 Frankfurt am Main 80 (DE)**

(72) Erfinder : **Kaminsky, Walter, Prof. Dr.**
**Buschweg 52**
**D-2080 Pinneberg (DE)**
Erfinder : **Hähnsen, Heinrich**
**Dorfstrasse 24**
**D-2071 Delingsdorf (DE)**

**EP 0 108 339 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Die vorliegende Erfindung betrifft die Herstellung von Aluminoxanen, vorzugsweise von Methylaluminoxan. Derartige Aluminoxane können als Katalysatorkomponente bei der Herstellung hochaktiver, homogener Ziegler-Katalysatoren verwendet werden, wie es z. B. in DE-A 30 07 725 und DE-A 31 27 133 beschrieben ist.

Weiterhin ist die Herstellung von Polyaluminoxanen mit Oligomerisierungsgraden von 8-26 bekannt, wobei die Hydrolyse der tert. Aluminiumalkyle mittels Wasser in tert. Alkylaminen als Lösungsmittel durchgeführt wird (DE-A 2 102 810). Die dabei entstehenden Produkte sind jedoch braun gefärbt und nur schwach hydrolyseempfindlich. Außerdem lassen sich nach diesem Verfahren keine Methylaluminoxane mit den gewünschten höheren Oligomerisierungsgraden herstellen.

Es sind verschiedene Verfahren zur Herstellung von Aluminoxanen bekannt. So erhält man Aluminoxane beispielsweise durch Einwirkung von Wasserdampf auf eine benzolische Lösung von Trialkylaluminium (J. Am. Chem. Soc. 90, 1968, 3173), durch Verwendung von Lithiumdialkylaluminat als aluminiumorganische Ausgangsverbindung (J. Chem. Soc. 89, 1967, 173), durch Oxydation von Aluminiumkohlenwasserstoffverbindungen mit Bleidioxid (J. Organomet. Chem. 43, 1972, 81), und auch durch Hydrolyse von Aluminiumalkylen mit kristallwasserhaltigem Kupfersulfat (Jzv. Akad. Nauk, SSSR, Ser. Chim 11, 1975, 2547), aber auch allgemein mit kristallwasserhaltigen Salzen der Formel $K \cdot A \cdot aH_2O$ (K = Kation, A = Anion, a = 2 ; SU-Pat. 566 844) sowie durch langsame Zugabe von Wasser zu Aluminiumalkylen (US Pat. Nr. 3 242 099). Nach all diesen Verfahren erhält man sehr kurzkettige Aluminoxane, die überwiegend oder auch ausschließlich Verbindungen der Formel

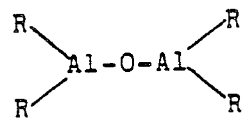

mit R = Methyl, Ethyl, Butyl, Isobutyl etc... sind. Methylaluminoxan läßt sich nach den genannten Methoden außerdem nur schwer und in sehr schlechter Ausbeute herstellen.

Bekannt ist es ferner, durch Umsetzung von Trimethylaluminium mit kristallwasserhaltigem Kupfersulfat ($CuSO_4 \cdot 5H_2O$) nach einer Methode von J. Herwig (Dissertation Universität Hamburg, 1979) oligomere Aluminoxangemische mit einem Oligomerisationsgrad zwischen 2 und 12 herzustellen. Die Ausbeute liegt hierbei jedoch nur bei ca. 30 %, bezogen auf das eingesetzte Aluminiumtrialkyl. Nachteilig ist ferner, daß durch Reduktionsreaktionen immer Spuren von Kupfer im so hergestellten Aluminoxan verbleiben, die das Produkt gelb bis rot färben. Vor der Verwendung als Katalysatorkomponente bei der Polymerisation von Olefinen müssen sie filtriert, gereinigt und umkristallisiert werden, da sonst die Polymerisation gestört und das Polymerisat qualitativ beeinträchtigt wird. Aber selbst nach Reinigung und Umkristallisation können diese Aluminoxane noch Kupferreste enthalten.

Es wurde nun gefunden, daß man längerkettige oligomere, lineare und/oder cyclische Alkylaluminoxane der Formeln

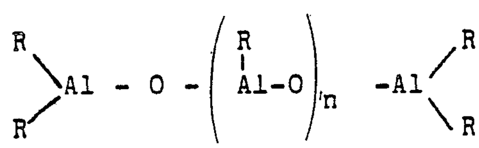

für lineares und

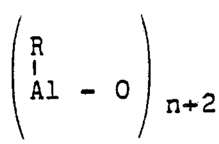

für cyclisches Aluminoxan, wobei

n = 2-40, vorzugsweise 10-20 und

R = $C_1$-$C_6$ Alkyl, vorzugsweise Methyl ist,

erhält, wenn man bei Temperaturen zwischen —20 und 100 °C, vorzugsweise zwischen 15 und 40 °C in einem inerten aliphatischen oder aromatischen Lösungsmittel, vorzugsweise Toluol oder Heptan, gelöstes Aluminiumtrialkyl, vorzugsweise Aluminiumtrimethyl, mit kristallwasserhaltigen Aluminiumsalzen, vorzugsweise Aluminiumsulfat, zur Reaktion bringt.

Dabei beträgt das Volumenverhältnis zwischen Lösungsmittel und dem verwendeten Aluminiumalkyl 1 : 1 bis 50 : 1 — vorzugsweise 5 : 1 — und die Reaktionszeit, die durch Abspaltung des Alkans

kontrolliert werden kann, 1 bis 200 Stunden — vorzugsweise 10 bis 40 Stunden.

Von den kristallwasserhaltigen Aluminiumsalzen werden bevorzugt jene verwandt, die einen hohen Gehalt an Kristallwasser aufweisen. Besonders bevorzugt ist Aluminiumsulfat-Hydrat, vor allem die Verbindung $Al_2(SO_4)_3 \cdot 18H_2O$ und $Al_2(SO_4)_3 \cdot 16H_2O$ mit dem besonders hohen Kristallwassergehalt von 16 bzw. 18 Mol $H_2O$/Mol $Al_2(SO_4)_3$.

Als Aluminiumalkyl wird das Aluminiumtrimethyl besonders bevorzugt eingesetzt. Geeignete Aluminiumalkyle sind ferner beispielsweise die Verbindungen $AlR_3$ mit R = Ethyl, iso-Propyl, Butyl, iso-Butyl und Phenyl.

In einem inerten Lösungsmittel, z. B. Heptan oder Toluol, verdünntes Aluminiumtrimethyl reagiert mit den besonders bevorzugt verwendeten $Al_2(SO_4)_3 \cdot 18\ H_2O$ oder $Al_2(SO_4)_3 \cdot 16\ H_2O$ entsprechend der Gleichung :

$$x \cdot (Al_2(SO_4)_3 \cdot 18(16)H_2O) + (n+1)Al(CH_3)_3 \rightarrow -\left(\begin{matrix} CH_3 \\ | \\ Al-O \end{matrix}\right)_n - \begin{matrix} CH_3 \\ | \\ Al \end{matrix}$$

$$+\ m\ CH_4$$

$$+\ x\ (Al_2(SO_4)_3 \cdot (18(16)\ \tfrac{m}{2x})H_2O)$$

mit

n = 2 bis 40, vorzugsweise n = 10-20

m = 2 n für lineare Aluminoxane oder 2 n + 2 für cyclische Aluminoxane

x = 0,06 bis 0,15 n, vorzugsweise 0,11 n.

Erstaunlicherweise läßt sich bei der Umsetzung des leicht zugänglichen Aluminiumsulfat-Hydrats mit Aluminiumtrimethyl sowohl die Ausbeute an Methylaluminoxan bis auf über 60 % steigern als auch der mittlere Oligomerisationsgrad auf Werte von größer 20 erhöhen. Das so hergestellt Methylaluminoxan ist farblos und frei von anderen Metallen, die sich z. B. bei seiner Verwendung als Cokatalysator auf die Olefin-Polymerisation störend auswirken.

Das erfindungsgemäße Verfahren weist somit gegenüber den Verfahren des Standes der Technik wesentliche Vorteile auf, die vor allem darin zu sehen sind, daß eine höhere Ausbeute erzielt wird und daß Aluminoxane von größerer Reinheit und höherem Oligomerisationsgrad erhalten werden. Dadurch ist es möglich, die nach der Erfindung hergestellte Aluminoxanlösung auch ohne die bei den Verfahren des Standes der Technik erforderliche Filtration, Reinigung und Umkristallisation direkt zu verwenden, z. B. als Cokatalysator zusammen mit einer Schwermetallkomponente bei der Polymerisation von Olefinen. Dennoch dürfte es in manchen Fällen zweckmäßig sein, die erfindungsgemäß hergestellten Aluminoxane aus der Kohlenwasserstofflösung abzutrennen, umzukristallisieren und zu reinigen. Möglich ist es auch, die Aluminoxan-Lösung auf festes Aluminoxan aufzuarbeiten.

Besondere Ausführungsarten der Erfindung sind in den Unteransprüchen angegeben.

Wie bereits erwähnt, können die erfindungsgemäß hergestellten, längerkettigten Alkylaluminoxane, vor allem das Methylaluminoxan, als Katalysatorkomponente bei der Olefin-Polymerisation vorteilhaft verwendet werden. Hierbei ist es von entscheidender Bedeutung, daß der Oligomerisationsgrad dieser Aluminoxane wesentlich größer als 2 ist. Kurzkettige Aluminoxane, wie das aus dem Stand der Technik bekannte Methylaluminoxan $(CH_3)_2Al\text{-}OAl(CH_3)_2$, ergeben zusammen mit einer Schwermetallkomponente Katalysatorsysteme, die praktisch keine oder nur eine sehr geringe Polymerisationsaktivität aufweisen.

Dagegen erhält man beispielsweise durch Vermischung von Methylaluminoxan, hergestellt gemäß der Erfindung, und Bis(cyclopentadienyl)verbindungen des Titans und besonders des Zirkoniums in vielen Kohlenwasserstoffen lösliche Katalysatoren, mit denen bei der Polymerisation von Olefinen extrem hohe Aktivitäten von über 25 Millionen g Polyethylen pro g Übergangsmetall und Stunde erzielt werden können. Darüberhinaus sind Katalysatorsysteme mit den längerkettigen Methylaluminoxanen als Cokatalysator recht unempfindlich gegenüber Verunreinigungen z. B. der Monomeren.

Vorteilhaft ist es auch, daß die Aluminoxane gemäß der Erfindung weniger selbstentzündlich sind und weniger korrosiv wirken als die bei der Olefin-Polymerisation häufig als Cokatalysator verwendeten Aluminiumalkylhalogenide.

## Beispiel 1

37,1 g $Al_2(SO_4)_3 \cdot 18\ H_2O$ (0,056 Mol, entsprechend 1 Mol $H_2O$) werden in 250 ml Toluol suspendiert, mit 50 ml Trimethylaluminium (0,52 Mol) versetzt und bei 20 °C zur Reaktion gebracht. Nach 30 Stunden Reaktionszeit sind ca. 1 Mol Methan entwickelt worden. Anschließend wird die Lösung vom festen Aluminiumsulfat abfiltriert. Durch Abziehen des Toluols werden 19,7 g Methylaluminoxan erhalten. Die Ausbeute beträgt 63 % d. Th. Das kryoskopisch in Benzol bestimmte mittlere Molekulargewicht liegt bei 1 170. Die Anzahl der $(\underset{R}{\underset{|}{Al}}\text{-}O)$-Einheiten errechnet sich zu 20,2.

Der mittlere Oligomerisationsgrad beträgt ca. 15.

Beispiel 2

Es wird wie in Beispiel 1 gearbeitet, jedoch wird bei einer Reaktionstemperatur von 40 °C umgesetzt. Bereits nach 11 Stunden beträgt die Abspaltung 1 Mol Methan. Die Lösung wird abfiltriert und als stabile Cokatalysatorlösung direkt für die Erzeugung des löslichen Ziegler-Katalysators verwendet. Ausbeute an Methylaluminoxan 60 %.

Beispiel 3

Es wird analog Beispiel 1 gearbeitet, jedoch mit der Abänderung, daß als Lösungsmittel Heptan verwendet wird und die Reaktionstemperatur 15 °C beträgt. Die Abspaltung für 1 Mol Methan erfordert 40 Stunden. Die Reaktionsmischung, die das Methylaluminoxan und Aluminiumsulfat enthält, ist auch ohne Filtration geeignet, bei Zugabe von Biscyclopentadienylzirkonverbindungen einen hochaktiven Ziegler-Katalysator zu bilden. Ein Teil des Ansatzes wird auf reines Aluminoxan aufgearbeitet, das ein kryoskopisch bestimmtes, mittleres Molekulargewicht von 1 210 besitzt. Die Anzahl der $(\underset{R}{\underset{|}{Al}}-O)$-Einheiten errechnet sich zu 20,9. Der mittlere Oligomerisationsgrad beträgt ca. 16.

Beispiel 4

60 g des Aluminiumchloridhydrates $AlCl_3 \cdot 6H_2O$ werden in 150 ml Toluol suspendiert und mit einer Lösung von 50 ml (0,52 Mol) Trimethylaluminium versetzt und 75 Stunden bei 40 °C zur Reaktion gebracht. Nach der Entwicklung von einem Mol Methan (66 % Umsatz) wird die Suspension abfiltriert und aus dem Filtrat durch Abziehen des Lösungsmittels das Methylaluminoxan erhalten (Ausbeute 18,4 g). Das Aluminoxan besitzt kryoskopisch bestimmtes mittleres Molekulargewicht von 1 000.

Beispiel 5

45 g $Al_2(SO_4)_3 \cdot 16H_2O$ werden in 150 ml Toluol suspendiert und mit 65 ml (0,47 Mol) Aluminiumtriethyl gelöst in 100 ml Toluol bei 40 °C zur Reaktion gebracht. Die Ethanabspaltung verläuft schneller als die Methanabspaltung bei dem vergleichbaren Methylsystem. So kann die Umsetzung bereits nach 6 Stunden Reaktionszeit und der Entwicklung von 1 Mol Ethan abgebrochen und das Filtrat auf Ethylaluminoxan aufgearbeitet werden. Die Ausbeute beträgt 18 g an farblosem, festem Ethylaluminoxan. Das kryoskopisch bestimmte Molekulargewicht liegt bei 1 511. Dies entspricht ca. 21 Aluminiumeinheiten in einem Aluminoxanmolekül.

**Patentansprüche**

1. Verfahren zur Herstellung von oligomeren, linearen und/oder cyclischen Alkylaluminoxanen der Formeln :

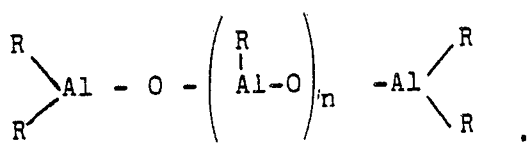

für lineares Aluminoxan und

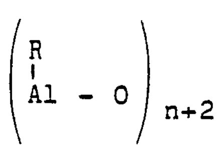

für cyclisches Aluminoxan mit
n = 2 bis 40 und
R = $C_1$-$C_6$-Alkyl,

dadurch gekennzeichnet, daß bei Temperaturen zwischen —20 und 100 °C in einem inerten aliphatischen

oder aromatischen Lösungsmittel gelöstes Aluminiumtrialkyl mit kristallwasserhaltigem Aluminiumsalz unter Alkanabspaltung zur Reaktion gebracht wird.

2. Verfahren nach Anspruch 1, dadurch gekennzeichnet, daß als Lösungsmittel Toluol oder Heptan verwendet werden.

3. Verfahren nach Anspruch 1, dadurch gekennzeichnet, daß bei Temperaturen zwischen 15 und 40 °C die Reaktion durchgeführt wird.

4. Verfahren nach Anspruch 1, dadurch gekennzeichnet, daß als Aluminiumtrialkyl Aluminiumtrimethyl eingesetzt wird.

5. Verfahren nach Anspruch 1, dadurch gekennzeichnet, daß 1 bis 30 %ige Aluminiumtrimethyllösungen verwendet werden.

6. Verfahren nach Anspruch 1, dadurch gekennzeichnet, daß 5 bis 20 %ige Aluminiumtrimethyllösungen verwendet werden.

7. Verfahren nach Anspruch 1, dadurch gekennzeichnet, daß als kristallwasserhaltiges Aluminiumsalz Aluminiumsulfat verwendet wird.

8. Verfahren nach Anspruch 1, dadurch gekennzeichnet, daß als kristallwasserhaltiges Aluminiumsalz Aluminiumsulfat-Hydrate mit 9 bis 18 Mol Kristallwasser verwendet werden.

9. Verfahren nach Anspruch 1, dadurch gekennzeichnet, daß als kristallwasserhaltiges Aluminiumsalz $Al_2(SO_4)_3 \cdot 18H_2O$ oder $Al_2(SO_4)_3 \cdot 16H_2O$ verwendet werden.

10. Verfahren nach Anspruch 1, dadurch gekennzeichnet, daß Aluminiumtrimethyl als Aluminiumtrialkyl und Aluminiumsulfat-Hydrat als kristallwasserhaltiges Aluminiumsalz verwendet werden und das Molverhältnis zwischen Aluminiumtrimethyl und Aluminiumsulfat-Hydrat 2 bis 18 beträgt.

11. Verfahren nach Anspruch 1, dadurch gekennzeichnet, daß Aluminiumtrimethyl als Aluminiumtrialkyl und Aluminiumsulfat-Hydrat als kristallwasserhaltiges Aluminiumsalz verwendet werden und das Molverhältnis zwischen Aluminiumtrimethyl und Aluminiumsulfat-Hydrat 9 beträgt.

12. Verfahren nach Anspruch 1, dadurch gekennzeichnet, daß Aluminiumtrimethyl als Aluminiumtrialkyl eingesetzt wird und die Reaktionsmischung filtriert wird und das Filtrat durch Entfernen des Lösungsmittels auf festes Methylaluminoxan aufgearbeitet wird.

13. Verwendung des nach dem Verfahren gemäß Anspruch 1 hergestellten Alkylaluminoxans als Katalysatorkomponente bei der Olefinpolymerisation.

## Claims

1. A process for the preparation of oligomeric, linear and/or cyclic alkylaluminoxanes of the formulae :

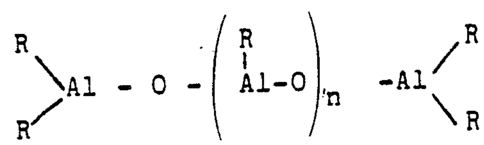

for a linear aluminoxane and

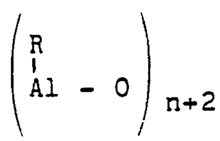

for a cyclic aluminoxane in which

n = 2 to 40 and

R = $C_1$-$C_6$-alkyl,

which comprises reacting, with the elimination of an alkane, an aluminum trialkyl dissolved in an inert aliphatic or aromatic solvent at temperatures between —20 and 100 °C with an aluminum salt containing water of crystallization.

2. The process as claimed in claim 1, wherein toluene or heptane is used as the solvent.

3. The process as claimed in claim 1, wherein the reaction is carried out at temperatures between 15 and 40 °C.

4. The process as claimed in claim 1, wherein aluminum trimethyl is employed as the aluminum trialkyl.

5. The process as claimed in claim 1, wherein 1 to 30 % strength solutions of aluminum trimethyl are used.

6. The process as claimed in claim 1, wherein 5 to 20 % strength solutions of aluminum trimethyl are used.

7. The process as claimed in claim 1, wherein aluminum sulfate is used as the aluminum salt containing water of crystallization.

8. The process as claimed in claim 1, wherein hydrated aluminum sulfates containing 9 to 18 molecules of water of crystallization are used as the aluminum salt containing water of crystallization.

9. The process as claimed in claim 1, wherein $Al_2(SO_4)_3 \cdot 18H_2O$ or $Al_2(SO_4)_3 \cdot 16H_2O$ is used as the aluminum salt containing water of crystallization.

10. The process as claimed in claim 1, wherein aluminum trimethyl is used as the aluminum trialkyl and hydrated aluminum sulfate is used as the aluminum salt containing water of crystallization, and the molar ratio between aluminum trimethyl and hydrated aluminum sulfate is 2 to 18.

11. The process as claimed in claim 1, wherein aluminum trimethyl is used as the aluminum trialkyl and hydrated aluminum sulfate is used as the aluminum salt containing water of crystallization, and the molar ratio between aluminum trimethyl and hydrated aluminum sulfate is 9.

12. The process as claimed in claim 1, wherein aluminum trimethyl is employed as the aluminum trialkyl, and the reaction mixture is filtered and the filtrate is worked up to give solid methyl aluminoxane by removing the solvent.

13. The use of the alkyl aluminoxane produced according to the process as claimed in claim 1 as a catalyst component in the polymerization of olefins.

## Revendications

1. Procédé pour préparer des alkyl-aluminoxanes oligomères, linéaires et/ou cycliques, qui répondent, les premiers (c'est-à-dire les linéaires), à la formule suivante :

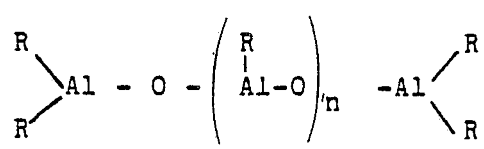

et les seconds (les cycliques), à la formule suivante :

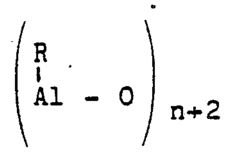

formules dans lesquelles
n désigne un nombre de 2 à 40 et
R représente un radical alkyle contenant de 1 à 6 atomes de carbone,
procédé caractérisé en ce qu'on fait réagir, à des températures comprises entre —20 et 100 °C, un trialkylaluminium dissous dans un solvant aliphatique ou aromatique inerte avec un sel d'aluminium contenant de l'eau de cristallisation, de manière qu'il se produise un enlèvement d'alcane.

2. Procédé selon la revendication 1 caractérisé en ce qu'on utilise, comme solvant, le toluène ou l'heptane.

3. Procédé selon la revendication 1 caractérisé en ce qu'on effectue la réaction à une température comprise entre 15 et 40 °C.

4. Procédé selon la revendication 1 caractérisé en ce qu'on utilise le triméthyl-aluminium comme trialkylaluminium.

5. Procédé selon la revendication 1 caractérisé en ce qu'on utilise des solutions de triméthyl-aluminium d'une concentration comprise entre 1 et 30 %.

6. Procédé selon la revendication 1 caractérisé en ce qu'on utilise des solutions de triméthyl-aluminium d'une concentration comprise entre 5 et 20 %.

7. Procédé selon la revendication 1 caractérisé en ce qu'on utilise, comme sel d'aluminium contenant de l'eau de cristallisation, un sulfate d'aluminium.

8. Procédé selon la revendication 1 caractérisé en ce qu'on utilise, comme sel d'aluminium contenant de l'eau de cristallisation, des sulfates d'aluminium hydratés contenant de 9 à 18 mol d'eau de cristallisation.

9. Procédé selon la revendication 1 caractérisé en ce qu'on utilise $Al_2(SO_4)_3 \cdot 18H_2O$ ou $Al_2(SO_4)_3 \cdot 16H_2O$ comme sel d'aluminium contenant de l'eau de cristallisation.

10. Procédé selon la revendication 1 caractérisé en ce qu'on utilise le triméthyl-aluminium comme trialkylaluminium et un sulfate d'aluminium hydraté comme sel d'aluminium contenant de l'eau de cristallisation, et en ce que le rapport molaire du triméthyl-aluminium au sulfate d'aluminium hydraté est compris entre 2 et 18.

11. Procédé selon la revendication 1 caractérisé en ce qu'on utilise le triméthyl-aluminium comme trialkylaluminium et un sulfate d'aluminium hydraté comme sel d'aluminium contenant de l'eau de cristallisation, et en ce que le rapport molaire entre le triméthyl-aluminium et le sulfate d'aluminium hydraté est de 9.

12. Procédé selon la revendication 1 caractérisé en ce qu'on utilise le triméthylaluminium comme trialkylaluminium, on filtre le mélange réactionnel et on traite le filtrat, en éliminant le solvant, pour isoler le méthylaluminoxane solide.

13. Application de l'alkyl-aluminoxane préparé par le procédé de la revendication 1 comme composante catalytique dans la polymérisation d'oléfines.